# DEMANDE DE BREVET EUROPEEN

(11) **EP 1 482 027 A1**
(43) Date de publication de la demande: **01.12.2004**
(21) Numéro de dépôt: 03101581.1
(22) Date de dépôt: 30.05.2003
(51) Int. Cl.: C12G 3/04

(54) **Boisson alcoolisée stable à base de lait**

(71) Demandeur: LUXLAIT Association Agricole, 1311 Luxembourg (LU)
(72) Inventeur: STEINMETZ, Claude, 1943, Luxembourg (LU)
(74) Mandataire: Kihn, Pierre Emile Joseph

(57) **Abrégé**

La présente invention concerne une boisson alcoolisée stable à base de lait écrémé, demi-écrémé ou entier comprenant entre 2 et 15% en volume d'alcool éthylique, entre 0.005 et 0, 5 % en poids d'un chélatant alimentaire, et des stabilisants choisis dans le groupe des hydrocolloïdes.

## Description

### Introduction

La présente invention concerne une boisson alcoolisée stable à base de lait comprenant entre 2 et 15% en volume d'alcool éthylique.

Il existe actuellement sur le marché diverses boissons alcoolisées à base de lait ou à base de produits laitiers.

La demande de brevet GB 2 084 185 divulgue une boisson alcoolisée à base de crème et de caséinate de sodium. Du citrate en tant qu'agent stabilisant est ajouté en une teneur d'environ 1 : 100 par rapport au produit fini.

### Objet de l'invention

L'objet de la présente invention est de proposer une boisson alcoolisée stable à base de lait comprenant entre 2 et 15% en volume d'alcool éthylique.

### Description générale de l'invention

Conformément à l'invention, cet objectif est atteint par une boisson alcoolisée stable à base de lait comprenant entre 2 et 15% en volume d'alcool éthylique, entre 0.005 et 0.5 %, de préférence entre 0.01% et 0.2% et de manière particulièrement préférée entre 0.05 et 0.1% en poids d'un chélatant alimentaire, ainsi que des agents de texture stabilisants ce mélange.

Un des avantages d'une telle boisson réside dans sa longue durée de conservation (au moins 3 à 6 mois) sans qu'il ne faille la conserver au froid et sans que des séparations de phases ne soient à craindre.

D'une manière surprenante, le chélatant alimentaire ajouté en une quantité peu importante contribue à stabiliser le lait. De plus, il n'est pas nécessaire d'ajouter du caséinate dans la préparation.

Selon un premier mode de réalisation, le chélatant alimentaire est choisi parmi le groupe constitué du citrate, du lactate et du phosphate ou un mélange de ces chélatants. Le citrate est particulièrement préféré, car il est présent dans le lait et tend à évoluer dans le lait pour se complexer aux protéines : il se retrouve ainsi sous forme colloïdale. Le citrate de potassium sera préférentiellement utilisé car il a la particularité de réduire la quantité de Ca²⁺ ionique par son action séquestrante.

Ce sel potassique est préféré au sel sodique pour son amertume peu gênante dans le lait.

Le lait utilisé dans la boisson est de préférence du lait de vache qui n'a subit aucun traitement à part éventuellement une homogénéisation et/ou un écrémage partiel ou total. Bien entendu, le lait de chèvre, de brebis ou de jument peuvent également être utilisés.

Contrairement à la boisson divulguée dans le brevet GB 2 084 185 qui est fabriquée à base de caséinate et de crème à 48 % de matières grasses diluée avec des émulsifiants, la boisson alcoolisée selon la présente invention est fabriquée à partir de lait de consommation qui peut être choisi parmi le groupe constitué du lait entier, du lait écrémé et du lait demi-écrémé.

Bien entendu, la boisson alcoolisée peut en outre comprendre des additifs usuels tels que des colorants, des arômes, du sucre, des agents édulcorants, des agents stabilisants, des conservateurs, des émulsifiants, du jus de fruits, des extraits de fruits, des arômes de fruits, etc.

L'alcool éthylique utilisé peut en principe être n'importe quel alcool comestible. On pourra ainsi utiliser du rhum, de la vodka, du whisky, du gin ou de l'alcool blanc. On utilisera préférablement de d'alcool éthylique à au moins 30v/v.

Le lait est de préférence un lait ne présentant pas les activités enzymatiques : phosphatase, lipase, peroxydase.

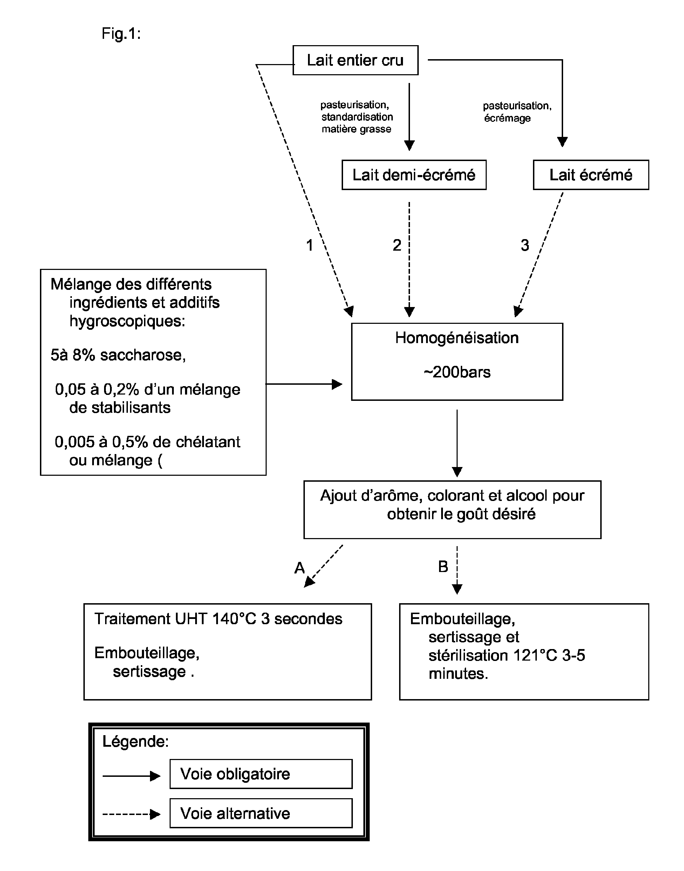

D'autres particularités et caractéristiques de l'invention ressortiront de la figure présentée ci -dessous, à titre d'illustration. La figure 1 montre les différentes étapes de production de la boisson alcoolisée

Un procédé de production préféré de la boisson alcoolisée contenant du lait et de l'alcool éthylique comprend les étapes suivantes :
- pasteuriser le lait ;
- refroidir ce lait à une température comprise entre 0 et 6 °C pendant au moins 6 heures. Ceci pour permettre la solubilisation des caséines et du Ca²⁺ naturellement présents dans le lait dans la phase aqueuse du lait.
- écrémer éventuellement le lait,
- ajouter entre 0.005 et 0,5 % en poids (du lait) d'un chélatant alimentaire, celui-ci mélangé le cas échéant aux autres ingrédients en poudre, comme p.ex. le sucre, les stabilisants hydrocolloïdes tels que le carraghénane, la carboxyméthylcellulose, la méthylcellulose cristalline ou autres ;
- réchauffer le mélange à 30°C/ 40°C. Cette température favorise la solubilisation des ingrédients en poudre ;
- homogénéiser le mélange à 200 bars environ ;
- ajouter l'alcool éthylique et les cas échéant les autres produits liquides tels que les arômes, les colorants etc..

Suivant un premier mode de réalisation, la boisson alcoolisée est emballée avant l'étape de chauffage - traitement stérilisation. La boisson est conditionnée en bouteilles verres de 250-330 ml et stérilisée à environ 120°C pendant 3-5 minutes.

Alternativement, on peut également emballer la boisson alcoolisée après l'étape de chauffage - traitement U.H.T.. Pour ce faire, on peut traiter le mélange par upérisation 140°C pendant 3 secondes ( UHT direct, c'est à dire par injection de vapeur) puis conditionner en bouteilles de polyéthylène, de PET ou de verre.

A cette boisson, on peut également ajouter des bulles au moyen d'une carbonatation. Dans ce cas, cette étape de carbonatation sera réalisée entre l'étape d'embouteillage et celle de sertissage de la capsule. On peut alternativement aussi utiliser de l'eau gazéifiée pour l'adjonction de bulles.

## Revendications

1. Boisson alcoolisée stable à base de lait écrémé, demi-écrémé ou entier comprenant entre 2 et 15% en volume d'alcool éthylique, entre 0.005 et 0, 5 % en poids d'un chélatant alimentaire, et des stabilisants choisis dans le groupe des hydrocolloïdes.

2. Boisson alcoolisée selon la revendication 1, **caractérisée en ce que** le chélatant alimentaire est choisi parmi le groupe constitué du citrate, du lactate et du phosphate ou de leurs mélanges.

3. Boisson alcoolisée selon la revendication 1 ou 2, **caractérisée en ce que** le lait est choisi parmi le groupe constitué du lait de vache, du lait de brebis, du lait de chèvre, du lait de jument ou de leurs mélanges.

4. Boisson alcoolisée selon l'une quelconque des revendications précédentes, **caractérisée en ce qu'**elle comprend en outre des colorants, des arômes, du sucre, des agents édulcorants, des conservateurs et/ou des émulsifiants.

5. Boisson alcoolisée selon l'une quelconque des revendications précédentes, **caractérisée en ce qu'**elle comprend en outre du jus de fruits, des extraits de fruits, des arômes de fruits.

6. Boisson alcoolisée selon l'une des quelconques revendications précédentes **caractérisée en ce qu'**elle est composée d'un lait ne présentant pas les activités enzymatiques : phosphatase, lipase, peroxydase.

7. Procédé de production d'une boisson alcoolisée contenant du lait et de l'alcool éthylique comprenant les étapes suivantes :
• pasteuriser le lait,
• refroidir ce lait à une température comprise entre 0 et 6 °C pendant au moins 6 heures,
• écrémer éventuellement le lait,
• ajouter entre 0.005 et 0,5 % en poids d'un chélatant alimentaire et les stabilisants hydrocolloïdes,
• réchauffer le mélange à 30/40°C
• homogénéiser le mélange à 200bars environ
• ajouter l'alcool éthylique et les cas échéant les autres produits liquides tels que les arômes, les colorants etc..
• conditionner le produit obtenu.

8. Procédé de production d'une boisson alcoolisée selon la revendication 7, **caractérisé en ce que** le conditionnement comprend l'emballage suivi d'une étape de chauffage.

9. Procédé de production d'une boisson alcoolisée selon la revendication 7, **caractérisé en ce que** le conditionnement comprend une étape de chauffage suivi de l'emballage.
